(19) Europäisches Patentamt
European Patent Office
Office européen des brevets

(11) **EP 2 656 917 B1**

(12) **EUROPÄISCHE PATENTSCHRIFT**

(45) Veröffentlichungstag und Bekanntmachung des Hinweises auf die Patenterteilung:
**21.06.2017 Patentblatt 2017/25**

(51) Int Cl.:
*B01L 3/02* *(2006.01)*      *F04B 17/04* *(2006.01)*
*F04B 7/00* *(2006.01)*      *F04B 13/00* *(2006.01)*

(21) Anmeldenummer: **13177645.2**

(22) Anmeldetag: **05.01.2011**

(54) **Dosiervorrichtung**

Metering device

Dispositif de dosage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.01.2010 DE 102010000690**

(43) Veröffentlichungstag der Anmeldung:
**30.10.2013 Patentblatt 2013/44**

(62) Dokumentnummer(n) der früheren Anmeldung(en) nach Art. 76 EPÜ:
**11700329.3 / 2 521 620**

(73) Patentinhaber: **Hamilton Bonaduz AG**
**7402 Bonaduz (CH)**

(72) Erfinder:
• **Hofstetter, Meinrad**
**7012 Felsberg (CH)**
• **Kirste, Vinzenz**
**55270 Zornheim (DE)**

(74) Vertreter: **RLTG**
**Ruttensperger Lachnit Trossin Gomoll**
**Patent- und Rechtsanwälte**
**Postfach 20 16 55**
**80016 München (DE)**

(56) Entgegenhaltungen:
EP-A1- 0 605 903      US-A- 4 692 673
US-A- 5 700 959      US-A1- 2008 247 913

EP 2 656 917 B1

**Beschreibung**

Die vorliegende Erfindung betrifft eine Pipette mit allen Merkmalen des Oberbegriffs von Anspruch 1.

Eine gattungsgemäße Pipette ist aus der US 2008/0247913 A1 bekannt. Deren verschiebbar in ein Führungsrohr eingesetzter Kolben umfasst zwar einen Permanentmagneten, dieser dient jedoch lediglich der lösbaren Verbindung zweier stangenförmiger Elemente, nämlich eines inneren Aktuatorsschaftes und eines Funktionskolbens. Mittels der Permanentmagneten können der Betätigungsschaft und der Funktionskolben aneinander festgelegt werden.

Aus der US 4,692,673 A ist eine Dosiervorrichtung in Form einer Pumpe bekannt, welche zwar eine Mehrzahl von Spulen umfasst, deren Windungen ein Führungsrohr umlaufen. Jedoch offenbart die Druckschrift D2 keinen Kolben mit aneinander angrenzenden Permanentmagnetabschnitten.

Aus der EP 0 604 903 A1 ist eine Pumpe mit beweglichem Magnet offenbart, deren Kolben zwar aneinander angrenzende Permanentabschnitte aufweist. Weiter weist die die Pumpe eine Spulenanordnung mit einer Mehrzahl von Spulen auf, deren Bindungen ein Führungsrohr jeweils abschnittsweise koaxial umlaufen. Die Druckschrift EP 0 604 603 A1 äußert sich jedoch nicht zur Wahl des Abstands zwischen axial benachbarten Spulen. Außerdem offenbart diese Druckschrift keine Pipette.

Die Druckschrift US 5,700,959 A offenbart zwar eine Pipette, welche einen Magneten umfasst. Die durch den dort offenbarten Magnetmechanismus erzeugte magnetische Kraft dient allerdings nur dazu, einen Benutzer der bekannten Pipette darin zu unterstützen, eine Kolbeneinheit in einer Ausgangsposition zu halten, in welcher die bekannte Pipette für eine Flüssigkeitsaufnahme vorbereitet ist.

Zum weiteren Stand der Technik gehören beispielsweise auch Pipetten mit einem Glasrohr, an dessen einem Ende ein Kolben verschiebbar eingeführt ist und an dessen anderem Ende eine Düse angeordnet ist, durch welche das zu dosierende Medium entsprechend der Verschiebung des Kolbens aspirierbar (ansaugbar) oder dispensierbar (abgebbar) ist. Zwischen dem Kolben und dem zu dosierenden Medium kann zusätzlich ein flüssiges oder gasförmiges Verdrängungsmedium angeordnet sein, so dass das zu dosierende Medium auch vollständig aus der Kammer gedrückt werden kann, bzw. auch kleinste Mengen angesaugt werden können.

Zur Betätigung des Kolbens in dem Führungsrohr sind Betätigungsanordnungen bekannt, welche mit dem Kolben gekoppelt sind und beispielsweise eine Drehbewegung eines Einstellelements in eine Verschiebungsbewegung des Kolbens umsetzen. Die Drehbewegung des Einstellelements kann dabei manuell oder unter Verwendung eines Elektromotors vorgenommen werden, wobei ein bestimmter Winkelbetrag der Drehung bzw. eine bestimmte Anzahl von Umdrehungen des Einstellelements in einen bestimmten Verschiebungsweg des Kolbens und damit in ein bestimmtes aspiriertes oder dispensiertes Volumen (Dosis) des zu dosierenden Mediums umgesetzt wird.

Für einige Anwendungen, insbesondere im Laborbereich, ist eine genaue Dosierung, d.h. eine genaue Abmessung der Menge des aspirierten oder dispensierten Mediums von großer Bedeutung. Mittels relativ aufwendiger mechanischer Untersetzungsgetriebe oder unter Verwendung von Präzisionselektromotoren wird dann in den bekannten Dosiervorrichtungen eine möglichst präzise Positionierung des Kolbens sowie eine möglichst gleichmäßige Bewegung des Kolbens angestrebt. Dabei kann zwar mit einem Untersetzungsgetriebe eine vergleichsweise hohe Positioniergenauigkeit erreicht werden, jedoch wird im gleichen Maße die Dynamik des Dosiervorgangs beeinträchtigt, da Untersetzungsgetriebe nur sehr träge arbeiten. Außerdem sind solche Getriebe kosten- und wartungsintensiv. Der Antrieb über Elektromotoren erfordert zumeist ebenfalls die Verwendung von Untersetzungsgetrieben oder geht zu Lasten der Genauigkeit aufgrund des Spiels des Motors bei direkter Motoransteuerung des Kolbens.

Ein weiteres bekanntes Problem herkömmlicher Dosiervorrichtungen liegt in der erforderlichen präzisen Anpassung zwischen Kolben und Führungsrohr, so dass einerseits der Kolben gegenüber dem Führungsrohr ausreichend abgedichtet ist, um einen Austritt von zu dosierendem Medium bzw. Verdrängungsmedium oder ein Eindringen von Luft zu verhindern, und andererseits der Kolben nicht zu fest im Führungsrohr sitzt, um eine Verschiebung des Kolbens um einen bestimmten Verschiebungsweg zuverlässig zu ermöglichen.

Vor diesem Hintergrund ist es Aufgabe der vorliegenden Erfindung, eine Dosiervorrichtung der eingangs genannten Art sowie ein Dosierverfahren unter Verwendung einer solchen Dosiervorrichtung bereitzustellen, mit welchen ein zu dosierendes Medium mit höherer Dosiergenauigkeit aspiriert oder dispensiert werden kann, und welche vorzugsweise einfach und kostengünstig realisierbar sind.

Gemäß der vorliegenden Erfindung wird diese Aufgabe gelöst durch eine Pipette mit allen Merkmalen des Anspruchs 1. Eine solche Pipette umfasst ein Führungsrohr, einen in dem Führungsrohr verschiebbar eingesetzten Kolben, eine Betätigungsanordnung zur Ausübung einer Kraft auf den Kolben, um den Kolben in dem Führungsrohr zu verschieben, und eine Kammer zur Aufnahme eines zu dosierenden Mediums, wobei das zu dosierende Medium entsprechend einer Verschiebung des Kolbens aspirierbar oder dispensierbar ist und wobei die Betätigungsanordnung für eine magnetische Wechselwirkung mit dem Kolben eingerichtet ist.

Ein wichtiger Aspekt der Erfindung liegt somit in der Betätigung des Kolbens durch magnetische Wechselwirkung. Das bedeutet, dass eine Kraft zur Verschiebung des Kolbens in dem Führungsrohr eine magnetische Kraft aufgrund eines Magnetfeldes ist. Im Gegensatz zu herkömmlichen Dosiervorrichtungen erfolgt somit die Bewegung des Kolbens nicht durch eine mechanische Kraftübertragung zwischen einem Einstellelement und dem Kolben sondern durch kontaktlose, magnetische Wechselwirkung. Die fehlende mechanische Kopplung zwischen Betätigungsanordnung und Kolben eliminiert Fehlerquellen, die in herkömmlichen Dosiervorrichtungen aufgrund eines Spiels des Betätigungsgetriebes oder des Motors oder aufgrund von Reibung nicht zu vermeiden waren.

Ferner erlaubt die Bewegung des Kolbens mittels Magnetkraft eine hohe Dynamik der Dosierung. Wird das Magnetfeld während des Dosiervorgangs mit elektrischen oder elektronischen Mitteln verstellt, z.B. durch Schalten von Spulen, so kann eine Bewegung des Kolbens mit sehr geringer Verzögerung erfolgen.

Erfindungsgemäß weist der Kolben einen Permanentmagneten auf. Im Hinblick auf die Ansteuerung des Magnetfelds zur Dosierung des Mediums ist erfindungsgemäß vorgesehen, dass die Betätigungsanordnung eine Magnetfelderzeugungseinrichtung zur Erzeugung eines Magnetfelds aufweist. Somit können die Mittel zur Erzeugung und zur Ansteuerung des Magnetfelds außerhalb des Führungsrohrs im magnetisch wirksamen Abstand angeordnet werden.

Vorzugsweise erzeugt die Magnetfelderzeugungseinrichtung einer erfindungsgemäßen Pipette ein Magnetfeld, dessen magnetischer Fluss den Kolben im Wesentlichen axial zum Führungsrohr durchsetzt. Bei einer solchen Orientierung des magnetischen Flusses ist die Wechselwirkung zwischen Magnetfeld und Kolben in Richtung der Verschiebung des Kolbens ausgerichtet, so dass die Kraftwirkung auf den Kolben effizient in Verschiebungsrichtung des Kolbens wirken kann. Um letztendlich eine Bewegung des Kolbens zur Dosierung des Mediums zu erreichen, ist eine Änderung der Größe, der Orientierung oder der Position des Magnetfelds erforderlich. Im einfachsten Fall kann dies durch Ein- oder Ausschalten des Magnetfelds erreicht werden, so dass der Kolben beispielsweise für eine bestimmte Zeitdauer vom Magneten angezogen oder abgestoßen wird und dabei um eine bestimmte Strecke verschoben wird. Alternativ oder zusätzlich kann das Magnetfeld durch Bewegung der Magnetfelderzeugungseinrichtung relativ zum Führungsrohr bewegt werden, so dass der Kolben dieser Bewegung folgt. Als weitere Alternative oder zusätzliche Möglichkeit könnte die Richtung oder Stärke des magnetischen Flusses des Magnetfelds geändert werden oder eine "Verformung" des Magnetfelds durch lokale Änderung von Richtung und Stärke des magnetischen Flusses vorgenommen werden, entsprechend der sich die auf den Kolben wirkenden magnetischen Kräfte ändern und zu einer Verschiebung des Kolbens führen (z.B. in einer Anordnung mit mehreren Magneten oder/und Spulen durch Steuerung/Bewegung einzelner Magnete/Spulen).

Erfindungsgemäß ist vorgesehen, dass die Magnetfelderzeugungseinrichtung eine Spulenanordnung mit mindestens einer Spule umfasst, deren Windungen das Führungsrohr koaxial umlaufen. Eine solche Spule kann durch Steuerung der ihr zugeführten Stromstärke ein veränderliches Magnetfeld aufbauen, um den Kolben mit einstellbarer Kraft in Richtung ihres axialen Zentrums zu ziehen. Die Spule kann alternativ oder zusätzlich koaxial zum Führungsrohr verschoben werden, um den Kolben zu bewegen.

Besondere Möglichkeiten zur flexiblen und genauen Dosierung ergeben sich dadurch, dass die Magnetfelderzeugungseinrichtung erfindungsgemäß eine Spulenanordnung mit einer Mehrzahl von Spulen umfasst, deren Windungen das Führungsrohr jeweils koaxial umlaufen, wobei die Spulen axial zu einander versetzt sind. Durch Einstellung der den einzelnen Spulen zugeführten Stromstärken kann dann das in dem Führungsrohr herrschende Magnetfeld hinsichtlich seiner Gesamtstärke sowie hinsichtlich seiner axialen Flussverteilung verändert werden, um den Kolben zu einer definierten Position im Führungsrohr zu ziehen. In einem einfachen Fall könnten zwei im axialen Abstand angeordnete Spulen wechselseitig betrieben werden, um den Kolben zwischen zwei Positionen hin und her zu bewegen.

Unter einer Spulenanordnung mit einer Mehrzahl von Spulen fällt im Sinne dieser Erfindung auch eine Anordnung in der Art eines Spartransformators (Autotransformer), welcher eine durchgehende Spulenwicklung mit endseitigen Kontakten sowie einem Mittelabgriffskontakt umfasst, so dass die beiden Spulenabschnitte zwischen den Endkontakten und dem Mittelabgriffskontakt einzeln angesteuert werden können. In weiteren Varianten einer solchen Spulenanordnung könnte der Mittelabgriffskontakt entlang der Spulenachse zwischen den Endkontakten verschiebbar sein, um das Verhältnis der Windungszahlen der beiden Spulenabschnitte zu verändern.

Vorzugsweise umfasst die Pipette der Erfindung ferner eine Steuereinrichtung zur Steuerung der Größe oder/und der Position oder/und der Richtung des Magnetfelds, so dass die Bewegung des Kolbens und die Position des Kolbens im Führungsrohr ansteuerbar sind. Eine elektronische Steuereinrichtung erlaubt eine zuverlässige, schnelle und präzise Bewegung und Positionierung des Kolbens und gewünschtenfalls auch eine Regelung der Kolbenposition durch Rückführung eines die Bewegung oder Position des Kolbens angebenden Erfassungswerts, beispielsweise von einem Positionsdetektor oder einer die Menge an aspiriertem oder dispensiertem Medium erfassenden Waage.

Vorteilhafterweise kann zwischen dem Kolben und dem Führungsrohr ein Gleitfilm aus einer magnetisierbaren Flüssigkeit angeordnet sein. Die Magnetfelderzeugungseinrichtung der Pipette kann dann auch zur Erzeugung eines auf den Gleitfilm wirkenden Magnetfelds dienen. Somit bewirkt das Magnetfeld einer Magnetfelderzeugungseinrichtung, dass der aus magnetisierbarer Flüssigkeit gebildete Gleitfilm zuverlässig in dem Zwischenraum zwischen Kolben und Führungsrohr verbleibt. Dies hat zum einen den Vorteil, dass eine reibungsarme Bewegung des Kolbens mit hoher Dynamik ermöglicht wird. Zum anderen kann durch diese Weiterbildung der Erfindung eine wesentlich erhöhte Abdichtung der Kammer gegenüber der Umgebung der Pipette erreicht werden.

Gemäß der vorliegenden Weiterbildung sorgt das Magnetfeld sorgt nicht nur für einen stabilen Gleitfilm einer magnetisierbaren Flüssigkeit zwischen Kolben und Führungsrohr, sondern bewegt gleichzeitig den Kolben in dem Führungsrohr zur Dosierung des Mediums. Dabei wird ausgenutzt, dass ein Entweichen des Gleitfilms besonders sicher vermieden werden kann, wenn sich der Gleitfilm am Ort des Kolbens befindet und mit dem Kolben im Magnetfeld mitbewegt.

Auch um die axiale Position des Gleitfilms zuverlässig vorgeben zu können, sollte die Magnetfelderzeugungseinrichtung vorzugsweise dafür eingerichtet sein, ein Magnetfeld zu erzeugen, dessen magnetischer Fluss am Ort des Kolbens im Wesentlichen axial zum Führungsrohr ausgerichtet ist.

Unter Verwendung einer Pipette der vorliegenden Erfindung ist ein Dosierverfahren zur Dosierung eines Mediums ausführbar, welches die Schritte umfasst: Bereitstellen eines Magnetfeldes und Ausüben einer Kraft auf den Kolben durch magnetische Wechselwirkung des Kolbens mit dem Magnetfeld. Mit einem solchen Dosierverfahren kann eine einfache und genaue Dosierung mit hoher Dynamik erreicht werden, indem im Wesentlichen ohne mechanische Kopplung auf den Kolben eine magnetische Kraft ausgeübt wird, die aus einer Wechselwirkung des Kolbens mit einem Magnetfeld resultiert. Durch Veränderung der Position, Richtung oder Größe des Magnetfelds oder durch Verformung des Magnetfelds kann dann eine Bewegung des Kolbens im Führungsrohr zur Dosierung des Mediums erfolgen.

Wenn das Dosierverfahren mit der erfindungsgemäße Pipette ausgeführt wird, die eine Spulenanordnung mit einer Mehrzahl von Spulen umfasst, deren Windungen das Führungsrohr jeweils koaxial umlaufen, wobei die Spulen axial zueinander versetzt sind, so können die den Spulen jeweils zugeführten Stromstärken nach Maßgabe einer zu aspirierenden oder dispensierenden Dosis gesteuert werden, um mit elektronischen Mitteln schnell und genau eine gewünschte Menge an zu dosierendem Medium anzusaugen oder abzugeben.

Der Permanentmagnet des Kolbens der Pipette der vorliegenden Erfindung behält auch ohne dauerhafte Zufuhr von Energie eine definierte Magnetisierung bei, welche zur Positionierung oder Bewegung des Kolbens durch die Betätigungsanordnung genutzt werden kann. Die Verwendung eines Permanentmagneten ermöglicht somit die Reduzierung der für den Betrieb der Dosiervorrichtung notwendigen Energie.

Erfindungsgemäß umfasst der Kolben der Pipette der vorliegenden Anmeldung mindestens zwei aneinander angrenzende Permanentmagnetabschnitte, deren Magnetisierungen axial zum Führungsrohr verlaufen, wobei die Magnetisierungen einander benachbarter Permanentmagnetabschnitte zueinander entgegengesetzt gerichtet sind. In einer solchen Anordnung können an den Stellen, an denen die Richtung der Magnetisierungen wechselt, d. h. im Übergangsbereich benachbarter Permanentmagnetabschnitte, relativ starke, radial verlaufende Magnetfelder erzeugt werden, welche eine besonders genaue Positionierung und hohe Ortsauflösung der axialen Position des Kolbens ermöglichen. Dieser Gewinn an Genauigkeit, der sich in einer verbesserten Dosiergenauigkeit der Dosiervorrichtung niederschlägt, ist auf die größere relative Änderung des Magnetfelds bei axialer Verlagerung des Kolbens zurückzuführen.

Wenngleich der vorstehend genannte Effekt bereits bei der Bereitstellung von nur zwei aneinander angrenzenden Permanentmagnetabschnitten mit zueinander entgegengesetzt gerichteten Magnetisierungen erreicht wird, ist in einer bevorzugten Ausführungsform der Erfindung vorgesehen, in axialer Richtung des Führungsrohrs mehr als zwei Permanentmagnetabschnitte anzuordnen, wobei jeweils benachbarte Permanentmagnetabschnitte zueinander entgegengesetzte Magnetisierungen aufweisen. Da jeder Permanentmagnetabschnitt so verstanden werden kann, dass er an seinem einen axialen Ende einen magnetischen Nordpol aufweist und an seinem anderen axialen Ende einen magnetischen Südpol aufweist, kann die Anordnung von Permanentmagnetabschnitten mit wechselnder Magnetisierungsrichtung gemäß der Erfindung auch so beschrieben werden, dass einander benachbarte Permanentmagnetabschnitte entweder jeweils mit ihren Südpolen oder jeweils mit ihren Nordpolen einander zugewandt sind. Der Effekt eines besonders starken und ausgeprägt in radialer Richtung verlaufenden Magnetfelds tritt dann immer gerade in den Übergangsbereichen auf, an denen die Nordpole bzw. die Südpole benachbarter Permanentmagnetabschnitte aufeinander treffen.

In einer besonders einfachen Ausführungsform der Erfindung ist vorgesehen, dass die Permanentmagnetabschnitte durch Permanentmagnete gebildet sind, welche so aneinander befestigt sind, dass magnetische Nordpole benachbarter Permanentmagnete einander zugewandt und einander benachbart angeordnet sind beziehungsweise magnetische Südpole benachbarter Permanentmagnete einander zugewandt und einander benachbart angeordnet sind. Ein auf diese Weise aufgebauter Kolben ist besonders einfach aus einer Mehrzahl an sich bekannter, zylindrischer Permanentmagnete herstellbar, die in abwechselnder Orientierung aneinander befestigt werden, vorzugsweise miteinander verklebt werden. Ein Kolben gemäß der Erfindung könnte alternativ jedoch auch durch Magnetisierung eines ferromagnetischen Materials unter Einwirkung eines entsprechend geformten Magnetfelds erreicht werden.

In einer weiteren Ausführungsform der Erfindung ist vorgesehen, dass der Kolben mindestens einen Dichtkörper umfasst, welcher zwischen einer Innenwandung des Führungsrohrs und den Permanentmagnetabschnitten oder dem Permanentmagneten angeordnet ist. Dadurch wird der Vorteil erzielt, dass der Permanentmagnet des Kolbens selbst nicht unbedingt passgenau entsprechend der inneren Abmessungen des Führungsrohrs hergestellt werden muss und eine zuverlässige Dichtung zwischen dem Permanentmagneten und dem Führungsrohr sichergestellt werden kann. Dabei wird insbesondere daran gedacht, dass der mindestens eine Dichtkörper in Form einer Kappe ausgebildet ist und auf ein axial oberes Ende oder/und ein axial unteres Ende des Permanentmagneten aufgesetzt ist oder auf einen axial obersten oder/und einen axial untersten Permanentmagnetabschnitt aufgesetzt ist. Auf diese Weise können die kappenartigen Dichtkörper so auf die Enden des Permanentmagnetkörpers aufgesetzt werden, dass sie jeweils die endseitigen Umfangsabschnitte sowie die endseitigen Stirnflächen des Permanentmagnetkörpers umgeben und ein Kontakt zwischen dem zu dosierenden Medium und dem Permanentmagnetkörper vermieden werden kann.

Gemäß einer Ausführungsform der vorliegenden Erfindung ist vorgesehen, dass die Betätigungsanordnung eine Magnetfelderzeugungseinrichtung zur Erzeugung eines Magnetfeldes aufweist, wobei die Magnetfelderzeugungseinrichtung eine Spulenanordnung mit mindestens einer Spule umfasst, welche mindestens eine Windung aufweist, wobei die mindestens eine Windung nur einen Teilabschnitt des Umfangs des Führungsrohrs umläuft. In dieser Ausführungsform umläuft somit die mindestens eine Windung der Spule das Führungsrohr nicht vollständig, d. h. ist nicht vollständig (um einen Umfangswinkel von 360 Grad) um das Führungsrohr herum gewickelt, sondern läuft nur an einem Teilabschnitt des Umfangs des Führungsrohrs (um einen Umfangswinkel kleiner als 360 Grad), so dass ein anderer Teilabschnitt des Umfangs des Führungsrohrs von der Windung frei ist. Dadurch ist das Führungsrohr an dem nicht von der Windung bedeckten Umfangsabschnitt noch zugänglich, beispielsweise um eine visuelle Kontrolle des Dosiervorgangs zu ermöglichen oder ein Positionserfassungselement zur Erfassung einer Position oder Bewegung des Kolbens an dem Führungsrohr anzuordnen. Je nach Größe des nicht von der Windung überdeckten Teilabschnitts und Verlauf der Windung können auch Vorteile im Hinblick auf die Anordnung, insbesondere die Dichte der Anordnung mehrerer benachbarter Pipetten oder die Anordnung benachbarter Spulen geschaffen werden, wie später noch detaillierter beschrieben wird.

Einen ähnlichen Ansatz wie die vorstehend beschriebene Ausführungsform verfolgt eine weitere vorteilhafte Ausführungsform der Erfindung, in welcher die Betätigungsanordnung eine Magnetfelderzeugungseinrichtung zur Erzeugung eines Magnetfeldes aufweist, wobei die Magnetfelderzeugungseinrichtung eine Spulenanordnung mit mindestens einer Spule umfasst, welche mindestens eine Windung aufweist, wobei die mindestens eine Windung vollständig auf einer Seite einer eine Längsmittelachse des Führungsrohrs enthaltenden Längsmittelebene verläuft. Auf diese Weise kann erreicht werden, dass die Spule im Wesentlichen nur die Hälfte des um das Führungsrohr vorhandenen Bauraums beansprucht, während die andere Hälfte vollständig zugänglich ist, und zwar zum Beispiel für eine gleichartige zweite Spule, für ein Positionserfassungselement oder auch für eine zweckmäßige Aneinanderfügung mehrerer Pipetten.

Insbesondere wird hierbei daran gedacht, dass die Spulenanordnung eine erste Spule mit mindestens einer ersten Windung und eine zweite Spule mit mindestens einer zweiten Windung umfasst, wobei die mindestens eine erste Windung vollständig auf der einen Seite der Längsmittelebene verläuft und die mindestens eine zweite Windung vollständig auf der anderen Seite der Längsmittelebene verläuft. Durch die von gegenüberliegenden Seiten an das Führungsrohr angesetzten Spulen kann ein besonders gleichmäßiges und gut definiertes axiales Magnetfeld im Inneren des Führungsrohrs erzeugt werden bzw. eine Erfassung eines Magnetfelds besonders zuverlässig erfolgen. Vorzugsweise ist dabei im Bereich der Längsmittelebene noch immer ein Teilabschnitt des Umfangs des Führungsrohrs weder von einer Windung der ersten Spule, noch von einer Windung der zweiten Spule überdeckt und ermöglicht somit einen Zugang zum Führungsrohr, beispielsweise für ein Positionserfassungselement oder eine visuelle Kontrolle des Dosiervorgangs.

In einer bevorzugten Variante der beiden zuletzt beschriebenen Ausführungsformen ist vorgesehen, dass die mindestens eine Windung der Spule vollständig zwischen zwei die Außenwand des Führungsrohrs berührenden, zueinander parallelen Tangentialebenen des Führungsrohrs verläuft. In dieser Variante kann insbesondere bei Aneinanderfügung mehrerer Führungsrohre eine hohe Packdichte erzielt werden, da benachbarte Führungsrohre mit relativ geringem Abstand voneinander angeordnet werden können. Während insbesondere eine Mehrzahl von das Führungsrohr vollständig umlaufenden Windungen schnell zu einem erhöhten Platzbedarf führt, wird der Mindestabstand zwischen benachbarten Führungsrohren bei Verwendung einer Spulenanordnung gemäß dieser Variante der Erfindung nicht durch die Dicke der mindestens einen Windung der Spule bestimmt. Stattdessen können eine Reihe von nebeneinander angeordneten Führungsrohren gemäß dieser Variante der Erfindung so aneinander gefügt werden, dass die oben beschriebenen Tangentialebenen benachbarter Führungsrohre im Wesentlichen parallel zueinander verlaufen. Die Führungsrohre können dann so dicht nebeneinander angeordnet werden, dass sich die Außenwände benachbarter Führungsrohre berühren oder nahezu berühren.

Vorzugsweise verläuft ein Windungsabschnitt der nur einen Teilabschnitt des Umfangs des Führungsrohrs umlaufenden Windung entlang einer Außenwand des Führungsrohrs, und zwar in Umfangsrichtung des Führungsrohrs. Ein solcher Windungsabschnitt kann ein in axialer Richtung verlaufendes Magnetfeld im Inneren des Führungsrohrs erzeugen, welches mit dem Kolben in Wechselwirkung treten kann.

Ferner kann ein Windungsabschnitt der mindestens einen Windung in axialer Richtung entlang einer Außenwand des Führungsrohrs verlaufen. Ein solcher axialer Windungsabschnitt ist vorzugsweise mit einem oben beschriebenen, in Umfangsrichtung verlaufenden Windungsabschnitt innerhalb der gleichen Windung verbunden, so dass das von dem axialen Windungsabschnitt erzeugte Magnetfeld eher geringere Wechselwirkung mit dem Kolben entfaltet und der axiale Windungsabschnitt vornehmlich der Zu-/Ableitung von Strom zu/von dem in Umfangsrichtung verlaufenden Windungsabschnitt dient.

Eine besonders vorteilhafte Kombination des in Umfangsrichtung verlaufenden Windungsabschnitts und des axialen Windungsabschnitts ergibt sich zusammen mit dem mindestens einen Permanentmagneten des Kolbens, insbesondere mit einer Mehrzahl von aneinander angrenzenden Permanentmagnetabschnitten mit wechselnden Magnetisierungsrichtungen aufweist. Vorteilhaft kann dann die axiale Länge des axial verlaufenden Windungsabschnitts an eine Länge des Permanentmagnetabschnitts oder des Permanentmagneten angepasst sein.

In einer weiteren Variante der Erfindung ist vorgesehen, dass die mindestens eine, nur einen Teilabschnitt des Umfangs des Führungsrohrs umlaufende Windung einen Windungsabschnitt aufweist, welcher zu dem Führungsrohr hin verläuft, anschließend entlang dem Führungsrohr verläuft und anschließend von dem Führungsrohr weg verläuft. In dieser Variante können Teile der Windung, welche nicht zur Erzeugung des gewünschten Magnetfeldes am Ort des Kolbens beitragen können, im Abstand vom Führungsrohr geführt werden, so dass ihr Magnetfeld das Magnetfeld der aktiven Teile der Windung, welche entlang dem Führungsrohr verlaufen, nicht stört. So kann ein gut definierbares und relativ homogenes Magnetfeld im Inneren des Führungsrohrs aufgebaut werden, obwohl die mindestens eine Windung im Gegensatz zum Fall einer normalen Spulenwindung das Führungsrohr nicht vollständig umläuft.

Wie bereits angedeutet, kann an dem nicht von der mindestens einen Windung umlaufenden Teilabschnitt des Umfangs des Führungsrohrs ein Positionserfassungselement angeordnet sein. Dieses Positionserfassungselement kann Teil eines Positionsdetektors sein, der mittels des Positionserfassungselements einen die Bewegung oder die Position des Kolbens angebenden Erfassungswert erfasst. Dieser Erfassungswert kann insbesondere für die bereits im Zusammenhang mit der Erfindung erwähnte Regelung der Kolbenposition verwendet werden, wobei eine Steuereinrichtung die Kolbenposition durch Rückführung des Erfassungswerts regelt. Auf diese Weise ist eine sehr präzise und automatisierte Dosierung möglich.

Das Positionserfassungselement kann ebenfalls für eine magnetische Wechselwirkung mit dem Kolben eingerichtet sein, d. h. eine Position oder/und Bewegung des Kolbens insbesondere durch Erfassung eines von dem Kolben erzeugten Magnetfelds bestimmen. Das vom Kolben erzeugte Magnetfeld kann dann gleichzeitig sowohl für die Steuerung des Kolbens (Kraftübertragung auf den Kolben) als auch für die Erfassung der Position/Bewegung des Kolbens verwendet werden, wodurch sich ein vereinfachter Aufbau ergibt.

Die Erfindung wird nachfolgend anhand bevorzugter Ausführungsbeispiele unter Bezugnahme auf die beigefügten Zeichnungen näher erläutert. Darin zeigen:

| | |
|---|---|
| Figur 1 | eine Querschnittsansicht einer Pipette nach einem ersten, nicht erfindungsgemäßen Ausführungsbeispiel, einschließlich einer Ausschnittsvergrößerung, |
| Figur 2 | eine Querschnittsansicht einer Pipette nach einem zweiten, nicht erfindungsgemäßen Ausführungsbeispiel, einschließlich einer Ausschnittsvergrößerung, |
| Figur 3 | eine schematische Seitenansicht einer Pipette nach einem dritten, nicht erfindungsgemäßen Ausführungsbeispiel, |
| Figur 4 | eine Seitenansicht einer Pipette gemäß einer ersten Ausführungsform der Erfindung, |
| Figuren 5a bis 5c | Darstellungen zur Magnetisierung eines Permanentmagnetkörpers eines Kolbens der in Figur 4 dargestellten Pipette, |
| Figur 6 | eine Darstellung zum Feldlinienverlauf des magnetischen Feldes des in Figuren 5a bis 5c gezeigten Permanentmagnetkörpers, |
| Figur 7 | eine perspektivische Ansicht eines Ausschnitts einer Pipette nach einer zweiten Ausführungsform der Erfindung, |
| Figur 8 | eine perspektivische Ansicht eines Abschnitts einer Pipette nach einer dritten Ausführungsform der Erfindung, |
| Figur 9 | eine Querschnittsansicht der in Figur 4 gezeigten Pipette in einer achsnormalen Schnittebene, und |
| Figur 10 | eine Querschnittsansicht der in Figur 7 gezeigten Pipette in einer achsnormalen Schnittebene. |

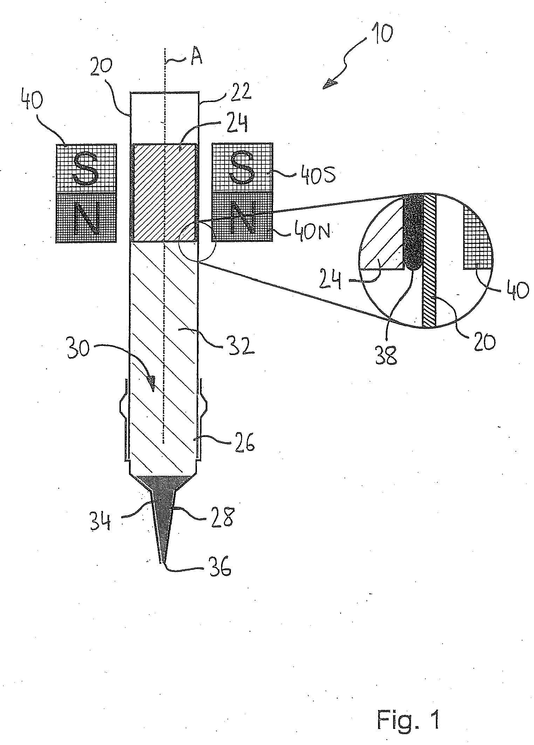

Eine in Figur 1 gezeigte Pipette 10 des ersten nicht von Anspruch 1 gedeckten Ausführungsbeispiels umfasst ein zylindrisches Führungsrohr 20 aus einem Glasmaterial, in dessen oberes, offenes Ende 22 ein Kolben 24 verschiebbar eingesetzt ist und auf dessen gegenüberliegendes, unteres Ende 26 ein Düsenabschnitt 28 aufgesteckt ist.

Das Innere des Düsenabschnitts 28 sowie das Innere des Führungsrohrs 20 zwischen dem Kolben 24 und dem Düsenabschnitt 28 bilden eine Kammer 30, welche im Ausführungsbeispiel teilweise durch ein Verdrängungsmedium 32 und zum anderen Teil durch ein zu pipettierendes Medium 34 gefüllt ist. Das Verdrängungsmedium 32 grenzt an den Kolben 24 an, während das zu pipettierende Medium an eine Düsenöffnung 36 des Düsenabschnitts 28 angrenzt.

Eine Bewegung des Kolbens 24 in axialer Richtung des Führungsrohrs 20, d.h. entlang einer Längsmittelachse A des Führungsrohrs 20, bewirkt eine Änderung des Volumens der Kammer 30 und dementsprechend ein Herausdrücken (Dispensieren) von zu pipettierendem Medium aus der Düsenöffnung 36 oder ein Ansaugen (Aspirieren) von zu pipettierendem Medium 34 durch die Düsenöffnung 36 in die Kammer 30.

Der Kolben 24 ist zumindest abschnittsweise aus magnetisierbarem Material gebildet und im Ausführungsbeispiel vollständig aus einem ferromagnetischen Metall hergestellt. Zwischen dem Außenumfang des Kolbens 24 und der Innenwandung des Führungsrohrs 20 ist ein Gleitfilm 38 aus einem Ferrofluid angeordnet, so dass der Ferrofluidfilm 38 den Kolben 24 vollständig umläuft und nach allen Seiten hin zum Führungsrohr abdichtet. Der Gleitfilm 38 dient somit sowohl der Abdichtung als auch der reibungsarmen Führung des Kolbens 24 im Führungsrohr 20.

Das Führungsrohr 20 ist konzentrisch durch einen ringförmigen Permanentmagneten 40 geführt. Der Permanentmagnet 40 ist so magnetisiert, dass sein magnetischer Nordpol 40N und sein magnetischer Südpol 40S in axialer Richtung zueinander versetzt sind. Im Ausführungsbeispiel ist der Nordpol 40N dem Düsenabschnitt 28 zugewandt, und der Südpol 40S ist dem offenen Ende 22 des Führungsrohrs 20 zugewandt. Selbstverständlich kann der Ring in anderer Orientierung auf dem Führungsrohr 20 aufgesteckt sein, so dass sein magnetischer Südpol 40S dem Düsenabschnitt 28 zugewandt ist.

Der Permanentmagnetring 40 erzeugt in seinem Zentrum, d.h. am Ort des Kolbens 24, ein näherungsweise homogenes Magnetfeld, dessen Feldlinien parallel zur Längsmittelachse A verlaufen. Das ferromagnetische Material des Kolbens 24 wird durch das Magentfeld magnetisiert. Zwischen dem magnetisierten Kolben 24 und dem Magnetfeld des Permanentmagnetrings 40 kommt es dann zur magnetischen Wechselwirkung im Sinne einer Anziehungskraft zwischen dem Kolben 24 und dem Permanentmagnetring 40. Dementsprechend ist der Kolben 24 stets bestrebt, im Zentrum des Permanentmagnetrings 40 positioniert zu sein. Wird der Permanentmagnetring 40 axial zum Führungsrohr 20 bewegt, so folgt der Kolben 24 dieser Bewegung und aspiriert bzw. dispensiert dementsprechend das zu pipettierende Medium 34 durch die Düsenöffnung 36.

Der Permanentmagnetring 40 kann manuell oder durch geeignete Bewegungssteuerungsmittel automatisiert bewegt werden, wobei die Bewegung mittels einer elektronischen Steuereinrichtung in für den Fachmann an sich bekannter Weise angesteuert, überwacht oder geregelt werden kann. Unabhängig von der Art und Weise, wie der Permanentmagnetring 40 bewegt wird, erfolgt die Übertragung der Bewegung vom Permanentmagnetring 40 auf den Kolben 24 kontaktlos allein durch magnetische Wechselwirkung, so dass Vibrationen, spielbedingte Stöße, mechanische Ungenauigkeiten und dergleichen vom Kolben 24 und vom Führungsrohr 20 entkoppelt werden können und somit eine sehr genaue Dosierung möglich ist. Durch die Entkopplung können ferner eine Kontaminierung der Betätigungsanordnung und gegebenenfalls der Steuereinrichtung durch zu pipettierendes Medium oder umgekehrt eine Verunreinigung des zu pipettierenden Mediums z.B. durch Schmierstoffe einer Bewegungseinrichtung des Permanentmagneten 40 verhindert werden.

Ferner kann der Permanentmagnetring 40 mit hoher Geschwindigkeit bewegt werden, um eine Dosierung mit hoher Dynamik zu erreichen. Dabei unterstützt der Gleitfilm 38 eine schnelle Bewegung des Kolbens 24 mit geringen Reibungsverlusten. Der aus Ferrofluid gebildete Gleitfilm 38 wird im Magnetfeld des Permanentmagnetrings ebenfalls magnetisiert und tritt somit auch in magnetische Wechselwirkung mit dem äußeren Magnetfeld. Durch die dadurch verursachte Anziehungskraft zwischen Gleitfilm 38 und Permanentmagnetring 40 wird der Gleitfilm 38 zuverlässig zusammen mit dem Kolben 24 auf gleicher axialer Höhe mit dem Permanentmagnetring 40 gehalten, so dass der Gleitfilm 38 stets in dem Zwischenraum zwischen Kolben 24 und Innenwand des Führungsrohrs 20 bleibt.

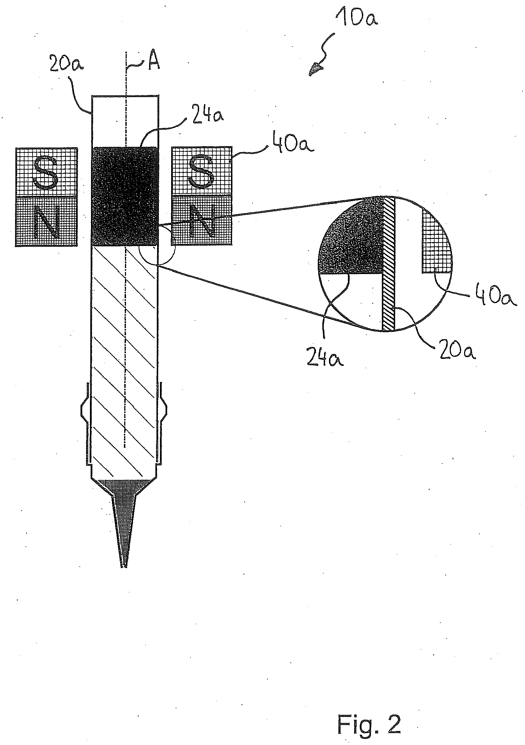

Nachfolgend wird unter Bezugnahme auf Figur 2 ein zweites, ebenfalls nicht von Anspruch 1 gedecktes Ausführungsbeispiel der Erfindung erläutert. Gleiche oder entsprechende Elemente des zweiten Ausführungsbeispiels sind gegenüber dem ersten Ausführungsbeispiel mit den gleichen Bezugszeichen, ergänzt um den Suffix "a", bezeichnet und werden nachfolgend nur hinsichtlich ihrer Unterschiede zum ersten Ausführungsbeispiel erläutert, wobei im Übrigen ausdrücklich auf die Beschreibung des ersten Ausführungsbeispiels verwiesen wird.

Die Pipette 10a des zweiten Ausführungsbeispiels umfasst ein Führungsrohr 20a mit einem verschiebbar darin eingesetzten Kolben 24a, welcher vollständig aus einer magnetisierbaren Flüssigkeit, insbesondere aus einem Ferrofluid, gebildet ist.

Wie im ersten Ausführungsbeispiel so ist auch im zweiten Ausführungsbeispiel das Führungsrohr 20a der Pipette 20a koaxial durch einen Permanentmagnetring 40a geführt, so dass der Kolben 24a im Magnetfeld des Permanentmagnetrings 40a angeordnet ist. Das Magnetfeld übernimmt im zweiten Ausführungsbeispiel zwei Funktionen. Zum ersten verhindert es ein Auslaufen des Ferrofluids, da das Ferrofluid stets bestrebt ist, sich im Bereich höchster magnetischer Feldstärke aufzuhalten, d.h. in das Zentrum des Permanentmagnetrings 40a gezogen wird und somit das Führungsrohr 20a an seiner Innenwand über den gesamten Umfang sicher abdichtet. Zum zweiten kann durch eine Bewegung des Magnetfelds, insbesondere durch Verschieben des Permanentmagnetrings 40a in axialer Richtung des Führungsrohrs 20a, der Ferrofluid-Kolben 24a entlang der Längsmittelachse A des Führungsrohrs 20a verschoben werden, um entsprechend dem Verschiebungsweg eine bestimmte Menge an zu pipettierendem Medium zu aspirieren bzw. zu dispensieren. Das Pipettieren kann wie im ersten Ausführungsbeispiel mit sehr hoher Dynamik erfolgen, da das Ferrofluid reibungsarm in dem Führungsrohr 20a gleitet.

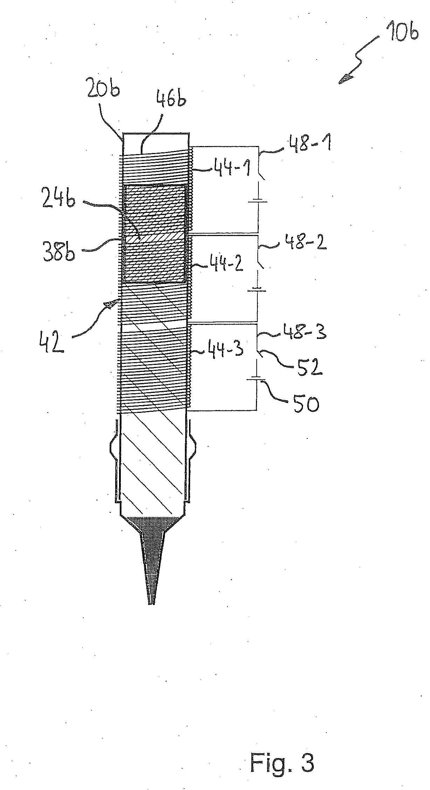

Im ersten sowie im zweiten Ausführungsbeispiel wird das Magnetfeld durch einen Permanentmagnetring 40 bzw. 40a erzeugt. Allgemein kann das Magnetfeld in Ausführungsformen der Erfindung jedoch auf vielfältige Weise bereitgestellt werden, insbesondere durch einen Elektromagneten. Ein Beispiel für eine Anordnung, in welcher das Magnetfeld durch einen Elektromagneten erzeugt wird, wird nachfolgend als drittes, nicht von Anspruch 1 gedecktes Ausführungsbeispiel der Erfindung unter Bezugnahme auf Figur 3 näher erläutert. Dabei wird nur auf die Unterschiedsmerkmale gegenüber dem ersten Ausführungsbeispiel (Figur 1) detaillierter eingegangen, während zu den übrigen, im Folgenden nicht noch einmal näher beschriebenen Merkmalen ausdrücklich auf die Beschreibung des ersten Ausführungsbeispiels hingewiesen wird. In Figur 3 sind gleiche oder entsprechende Elemente gegenüber Figur 1 mit den gleichen Bezugszeichen, ergänzt um den Suffix "b" bezeichnet.

In einer Pipette 10b des dritten Ausführungsbeispiels ist in ein Führungsrohr 20b ein dem Kolben 24 des ersten Ausführungsbeispiels vergleichbarer Kolben 24b verschiebbar eingesetzt, welcher aus einem magnetisierbaren Metall gebildet ist. Zwischen einem Außenumfang des Kolbens 24b und einer Innenwand des Führungsrohrs 20b ist ein Gleitfilm 38b aus einem Ferrofluid angeordnet.

Im Gegensatz zum ersten Ausführungsbeispiel wird im dritten Ausführungsbeispiel das für die Bewegung des Kolbens 24b benötigte Magnetfeld nicht durch einen Permanentmagneten erzeugt, sondern durch eine Spulenanordnung 42, welche drei in axialer Richtung Ades Führungsrohrs 20b hintereinander angeordnete Spulen 44-1, 44-2, 44-3 umfasst. Jede der Spulen 44-1, 44-2, 44-3 umfasst eine Mehrzahl von Windungen 46, welche koaxial zur Längsmittelachse A um den Außenumfang des Führungsrohrs 20b herum gewunden sind. Anfangs- und Endwindung jeder Spule 44-1, 44-2, 44-3 sind jeweils an separate Stromkreise 48-1, 48-2, 48-3 angeschlossen, mit denen jede Spule 44-1, 44-2, 44-3 einzeln und unabhängig von den anderen Spulen mit Spannung versorgt werden kann. Im Ausführungsbeispiel umfasst jeder der Stromkreise 48-1, 48-2, 48-3 eine Spannungsquelle 50 sowie einen in Reihe dazu geschalteten Schalter 52. Die Spannungsquellen 50 können miteinander verbunden sein bzw. von einer gemeinsamen Energieversorgungseinrichtung versorgt werden.

Abhängig von der Schalterstellung der jeweiligen Schalter 52 der Stromkreise 48-1, 48-2, 48-3 können die Spulen 44-1, 44-2, 44-3 in ihrem Inneren ein Magnetfeld mit parallel zur Längsmittelachse A verlaufenden Feldlinien aufbauen oder das Innere der Spulen 44-1, 44-2, 44-3 bleibt feldfrei. Je nach Schaltstellung der Schalter 52 wird demnach der Kolben 24b vom Magnetfeld einer der Spulen 44-1, 44-2, 44-3 oder von einem durch zwei oder drei der Spulen 44-1, 44-2, 44-3 aufgebauten Magnetfeld angezogen und in das Zentrum dieses Magnetfelds gezogen, so dass die Bewegung des Kolbens 24b im Führungsrohr 20b durch die Schalter 52 angesteuert werden kann.

Die Schalter 52 sind mit einer nicht dargestellten Steuereinrichtung verbunden, welche auf Grundlage einer von einem Benutzer eingestellten Menge an zu pipettierendem Medium die Stromzufuhr zu den Spulen 44-1, 44-2, 44-3 gezielt ansteuert. In einem einfachen Steuerungsbeispiel könnte die Spule 44-1 eingeschaltet werden (Schalter 52 des Stromkreises 48-1 geschlossen), während die beiden anderen Spulen 44-2, 44-3 abgeschaltet sind (Schalter 52 der Stromkreise 48-2, 48-3 geöffnet), so dass nur die Spule 44-1 ein Magnetfeld erzeugt und der Kolben 24b in die Spule 44-1 gezogen wird. Um eine Menge an zu pipettierendem Medium aus dem Düsenabschnitt abzugeben, könnte dann die Spule 44-2 eingeschaltet werden, wobei gleichzeitig die erste Spule 44-1 abgeschaltet wird. Der Kolben 24b wird dann in das Zentrum der zweiten Spule 44-2 gezogen und verdrängt dabei die entsprechende Menge an Verdrängungsmedium bzw. zu pipettierendem Medium aus dem Führungsrohr 20b. Entsprechend könnte anschließend die dritte Spule 44-3 eingeschaltet werden und die zweite Spule 44-2 könnte abgeschaltet werden.

Die Spulen 44-1, 44-2, 44-3 können nicht nur ein- und ausgeschaltet werden. Für eine genauere Dosierung der Abgabe könnten den Spulen jeweils bestimmte Stromstärken zwischen 0 und einem Maximalwert zugeführt werden. Wenn zwei benachbarten Spulen 44-1/44-2 bzw. 44-2/44-3 unterschiedliche Stromstärken zugeführt werden, so kann der Fachmann aus dem Verhältnis der Stromstärken leicht das tatsächlich am Ort des Kolbens wirkende Überlagerungsmagnetfeld errechnen und eine sehr genaue Positionierung des Kolbens 24b entlang der Längsmittelachse A im Führungsrohr 20b durch Einstellung bestimmter Stromstärken vornehmen. Auf diese Weise ist eine präzise Dosierung des zu pipettierenden Mediums ohne mechanische Wechselwirkung zwischen der Steuerungseinrichtung und dem Kolben 24b möglich. Ferner können die Ströme in den einzelnen Stromkreisen 48-1, 48-2, 48-3 mit hoher Geschwindigkeit geschaltet werden, so dass eine hohe Dynamik der Dosierung erreicht werden kann.

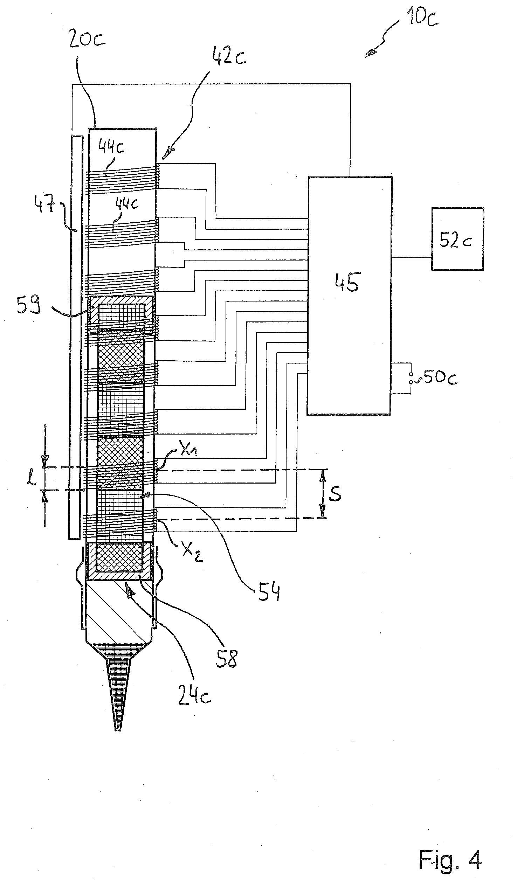

Nachfolgend wird unter Bezugnahme auf Figuren 4 bis 6 eine erste Ausführungsform der Erfindung erläutert. Gleiche oder entsprechende Elemente der ersten erfindungsgemäßen Ausführungsform sind gegenüber dem ersten Ausführungsbeispiel mit den gleichen Bezugszeichen, ergänzt um den Suffix "c" bezeichnet und werden nachfolgend nur hinsichtlich ihrer Unterschiede zum ersten Ausführungsbeispiel erläutert, wobei im Übrigen ausdrücklich auf die Beschreibung des ersten Ausführungsbeispiels verwiesen wird.

Eine Pipette 10c der ersten Ausführungsform umfasst ein zylindrisches Führungsrohr 20c, in welches ein Kolben 24c verschiebbar eingesetzt ist. Im Unterschied zum ersten und zweiten Ausführungsbeispiel umfasst der Kolben 24c der ersten Ausführungsform einen Permanentmagnetkörper 54, welcher ein dauerhaftes Magnetfeld erzeugt.

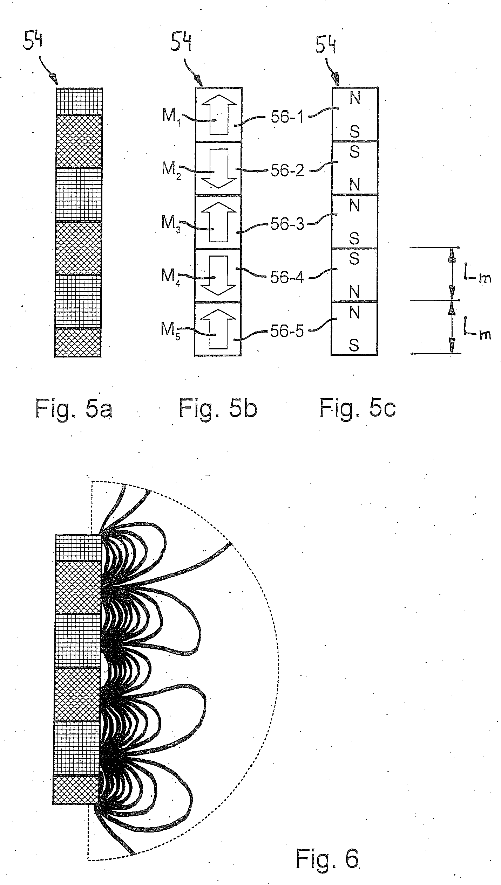

Der Aufbau des Permanentmagnetkörpers 54 ist detaillierter in Figuren 5a bis 5c dargestellt. Zu erkennen ist in Figuren 5b und 5c, dass der Permanentmagnetkörper 54 eine Mehrzahl (hier fünf) Permanentmagnetabschnitte 56-1, 56-2, 56-3, 56-4, 56-5 umfasst, welche in der Reihenfolge dieser Nummerierung in axialer Richtung des Führungsrohrs 20c aufeinander folgend angeordnet sind. Jeder der Permanentmagnetabschnitte 56-1, ..., 56-5 weist eine Magnetisierung $M_1$, ..., $M_5$ auf, deren Magnetisierungsrichtung in Figur 5b jeweils durch einen Pfeil angegeben ist. Dementsprechend sind die Magnetisierungen $M_1$, ..., $M_5$ aller Permanentmagnetabschnitte 56-1, ..., 56-5 axial ausgerichtet (parallel zur Längsmittelachse A), wobei jedoch die Richtung der Magnetisierungen $M_1$, ..., $M_5$ benachbarter Permanentmagnetabschnitte 56-1, ..., 56-5 jeweils einander entgegengesetzt sind, so dass die Magnetisierungen von Permanentmagnetabschnitt zu Permanentmagnetabschnitt entlang der axialen Richtung abwechselnd in die eine Richtung oder in die andere Richtung zeigen. So weist etwa in der Ausführungsform gemäß Figur 5 $M_1$ nach oben, $M_2$ nach unten, $M_3$ nach oben, $M_4$ nach unten und $M_5$ nach oben.

In der Ausführungsform haben alle Permanentmagnetabschnitte 56-1, ..., 56-5 die gleiche axiale Länge $L_m$. In dem Permanentmagnetkörper 54 ändert sich somit in axialer Richtung in Abständen von jeweils $L_m$ die Richtung der Magnetisierung.

Die Magnetisierungen $M_1$, ..., $M_5$ können auch durch Angabe magnetischer Nordpole bzw. magnetischer Südpole der einzelnen Permanentmagnetabschnitte 56-1, ..., 56-5 symbolisiert werden, wie in Figur 5c dargestellt. Der Permanentmagnetkörper 54 ergibt sich dann durch Aneinanderfügung der Permanentmagnetabschnitte 56-1, ..., 56-5 in solcher Weise, dass einander benachbarte Permanentmagnetabschnitte 56-1, ..., 56-5 jeweils mit ihren gleichnamigen Polen aneinander angrenzen. Im Ausführungsbeispiel grenzt der Südpol des Permanentmagnetabschnitts 56-1 an den Südpol des Permanentmagnetabschnitts 56-2, während der Nordpol des Permanentmagnetabschnitts 56-2 an den Nordpol des Permanentmagnetabschnitts 56-3 grenzt, und so weiter.

Der Permanentmagnetkörper 54 kann in einfacher Weise hergestellt werden, indem eine Mehrzahl einzelner Permanentmagnete entsprechend den Permanentmagnetabschnitten 56-1, ..., 56-5 mit ihren gleichnamigen Polen aneinander gefügt und zum Beispiel miteinander verklebt werden. In der Ausführungsform gemäß Figuren 5a bis 5c kann der Permanentmagnetkörper 54 somit durch Verbindung von fünf einzelnen Permanentmagneten gebildet sein.

Ein in der vorstehend beschriebenen Weise aufgebauter Permanentmagnetkörper 54 weist ein charakteristisches, sich in axialer Richtung stark veränderndes Magnetfeld auf, welches in Figur 6 in einer Feldliniendarstellung illustriert ist. Zu erkennen ist, dass insbesondere an den Stellen, an denen die Orientierung der Magnetisierung $M_1$, ..., $M_5$ sich ändert, d. h. an den Übergängen zwischen benachbarten Permanentmagnetabschnitten 56-1, ..., 56-5, ein stark radial verlaufendes, hohes Magnetfeld auftritt, welches abwechselnd nach außen bzw. nach innen orientiert ist. Diese ausgeprägte Magnetfeldcharakteristik kann für die präzise Steuerung bzw. Detektion des Kolbens genutzt werden, wie im Folgenden noch beschrieben wird.

Prinzipiell könnte der Permanentmagnetkörper 54 eine solche Form aufweisen, dass er passgenau und ausreichend dichtend in das Innere des Führungsrohrs 20c eingesetzt werden kann und selbst unmittelbar als Kolben wirken kann. Vorzugsweise weist der Kolben 24c jedoch ferner mindestens einen Dichtkörper 58, 59 auf, welcher zwischen dem Permanentmagnetkörper 54 und einer Innenwandung des Führungsrohrs 20c angeordnet ist. In der Ausführungsform sind zwei Dichtkörper 58, 59 vorgesehen, die jeweils auf Endabschnitte des Permanentmagentkörpers 54 aufgesetzt sind, so dass sie jeweils die endseitigen Umfangsabschnitte sowie die endseitigen Stirnflächen des Permanentmagnetkörpers 54 umgeben. Die Dichtkörper 58, 59 können beispielsweise als passende Gummikappen auf die Enden des Permanentmagnetkörpers 54 aufgesteckt sein.

Figur 4 zeigt eine Spulenanordnung 42c mit einer Mehrzahl von Spulen 44c, deren Windungen jeweils die Außenwandung des Führungsrohrs 20c ringförmig umlaufen. Jede der Spulen 44c kann somit an der entsprechenden axialen Position im Inneren des Führungsrohrs 20c ein in axialer Richtung orientiertes Magnetfeld erzeugen, das mit dem Kolben 24c in Wechselwirkung treten kann. Durch Steuerung/Regelung eines durch die Spulen 44c fließenden Stroms kann vermittels einer Wechselwirkung des dabei erzeugten Spulenmagnetfelds mit dem Magnetfeld des Permanentmagnetkörpers 54 (Figur 6) eine Kraft auf den Kolben 24c in axialer Richtung des Führungsrohrs 20c ausgeübt werden, um den Kolben 24c zum Aspirieren oder Dispensieren des zu dosierenden Mediums zu verschieben.

Die Spulen 44c weisen eine axiale Spulenlänge I auf und sind in Abständen s voneinander angeordnet. Dabei wird der Abstand s zwischen benachbarten Spulen 44c zweckmäßigerweise zwischen axial mittleren Positionen (bei I/2) jeder Spule 44c gemessen.

Der Abstand s zwischen benachbarten Spulen 44c ist abhängig von der axialen Länge $L_m$ der Permanentmagnetabschnitte 56-1, ..., 56-5 sowie in Abhängigkeit von der Phasenansteuerung der Spulen 44c vorgesehen. Entsprechend der Anordnung der Permanentmagnetabschnitte 56-1, ..., 56-5 mit alternierender Magnetisierungsrichtung (vgl. Figur 5) folgt, dass das Magnetfeld in axialer Richtung eine Periode von 2 x $L_m$ aufweist. Soll die Verschiebung des Kolbens 24c über diese Periodenlänge hinweg durch sequentielle Ansteuerung einer Mehrzahl von n axial aufeinanderfolgenden Spulen 44c erfolgen, so wird dies durch einen n-Phasenbetrieb der Spulen 44c erreicht, wenn der Abstand zwischen benachbarten Spulen 44c

$$s = 1/n \times 2 \times L_m \qquad\qquad (1)$$

beträgt.

Gemäß dieser Gleichung wäre also z. B. für einen Drei-Phasen-Betrieb ein Spulenabstand von s = 2/3 x $L_m$, zu wählen, während für einen Vier-Phasen-Betrieb der Spulenabstand s = 1/2 x $L_m$ betragen sollte.

Zur besonders genauen bzw. automatisierten Dosierung des Mediums kann der durch die Spulen 44c fließende Strom in Abhängigkeit von einer erfassten Bewegung oder Position des Kolbens 24c eingestellt werden. Wie in Figur 4 gezeigt ist, können dazu die Spulen 44c jeweils mit einer Steuereinrichtung 45 verbunden sein, welche dazu in der Lage ist, den jeweils durch die Spulen 44c fließenden Strom bzw. die jeweils an die Spulen 44c angelegte Spannung zu steuern. Die Steuereinrichtung 45 ist Teil eines Regelkreislaufs und empfängt einen die Bewegung oder/und die Position des Kolbens 24c angebenden Erfassungswert von einem Positionserfassungselement 47. Das Positionserfassungselement 47 kann sich entlang des Führungsrohrs 20c erstrecken. In der Ausführungsform gemäß Figur 4 ist das Positionserfassungselement 47 ein optischer Detektor, z.B. ein optischer Zeilensensor (CCD-Zeilensensor, CMOS-Zeilensensor oder dergleichen) aus einem eindimensionalen, sich entlang des Führungsrohrs 20c erstreckenden Array aus Fotodetektoren. Die optische Erfassung der Position bzw. Bewegung des Kolbens 24c hat den Vorteil, dass es nur zu geringer oder überhaupt keiner Störung zwischen der Positions-/Bewegungserfassung und der magnetischen Kolbensteuerung durch die Spulen 44c kommt.

Im Betrieb ist die Steuereinrichtung 45 an eine Spannungsquelle 50c sowie an eine Eingabeeinheit 52c angeschlossen. Über die Eingabeeinheit 52c (z.B. eine elektronische Eingabeeinheit, insbesondere Computer) kann der Nutzer eine gewünschte Dosiermenge eingeben. Die Nutzereingabe wird an die Steuereinrichtung 45 übergeben, welche daraus eine der Dosiermenge entsprechende Sollposition bzw. Sollbewegung für den Kolben 24c errechnet. Abhängig von dem vom Positionserfassungselement 47 eingegebenen Erfassungswert bestimmt die Steuereinrichtung während des Dosiervorgangs wiederholt eine Abweichung zwischen der erfassten Position bzw. Bewegung des Kolbens 24c und der Sollbewegung bzw. Sollposition des Kolbens 24c und steuert die Stromstärke der Spulen 44c in Abhängigkeit von der Größe dieser Abweichung. Die Steuereinrichtung 45 wird dabei die Spulenströme vorzugsweise so steuern, dass die Kraftwirkung auf den Kolben 24c umso höher ist, je größer die Regelabweichung zwischen der erfassten Kolbenbewegung/-position und der Sollbewegung/-position des Kolbens ist.

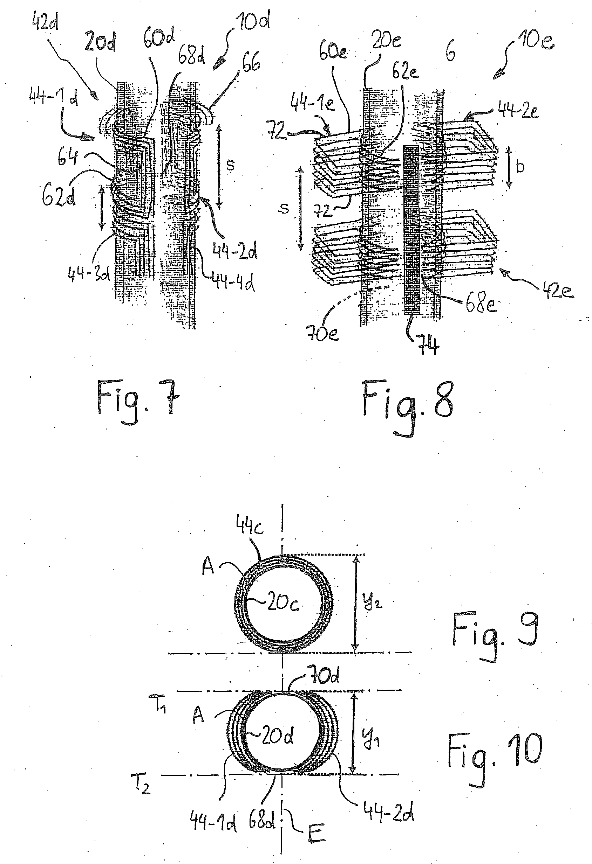

Nachfolgend wird unter Bezugnahme auf Figur 7 eine zweite Ausführungsform der Erfindung erläutert. Die zweite Ausführungsform kann als Variante der ersten Ausführungsform angesehen werden, so dass im Folgenden nur auf die Unterschiede eingegangen wird und hinsichtlich der nicht erneut beschriebenen Elemente der Pipette ausdrücklich auf die Beschreibung der ersten Ausführungsform hingewiesen wird.

Eine Pipette 10d der zweiten Ausführungsform umfasst ein Führungsrohr 20d, in welchem ein nicht dargestellter Kolben verschiebbar aufgenommen ist. Zur Steuerung der Position bzw. Bewegung des Kolbens mittels magnetischer Wechselwirkung ist eine Spulenanordnung 42d mit einer Mehrzahl von Spulen 44-1d, 44-2d, 44-3d, 44-4d am Außenumfang des Führungsrohrs 20d angeordnet. Von den in der Ausschnittsdarstellung gemäß Figur 7 gezeigten Spulen, sind die Spulen 44-1 d und 44-2d an einer ersten axialen Position des Führungsrohrs 20d angeordnet, während die Spulen 44-3d und 44-4d an einer zweiten (anderen) axialen Position des Führungsrohrs 20d angeordnet sind. Vorzugsweise sind weitere, in Figur 7 nicht gezeigte Spulenpaare axial verteilt am Führungsrohr 20d vorgesehen.

Die Spule 44-1 d, welche stellvertretend für alle Spulen 44-1 d...44-4d beschrieben wird, umfasst eine Mehrzahl von Windungen 60d, wobei jede Windung 60d in etwa die Form eines Rechtecks aufweist, das sich an die zylinderförmige Außenwandung des Führungsrohrs 20d anschmiegt. Entsprechend umfasst jede Windung 60d zwei in Umfangsrichtung verlaufende Windungsabschnitte 62d sowie zwei axiale Windungsabschnitte 64.

Eine Mehrzahl solcher rechteckförmiger Windungen 60d verlaufen umeinander beziehungsweise spiralförmig ineinander verschachtelt an der Außenwand des Führungsrohrs 20d. Darüber hinaus können Windungen dieser Art auch in mehreren Lagen auf der Außenfläche des Führungsrohrs 20d angeordnet sein, wie in Figur 7 bei Bezugszeichen 66 angedeutet. Die Mehrzahl von Windungen 60d, die unmittelbar auf der Außenseite des Führungsrohrs 20d angeordnet sind, und ggf. die zusätzlichen Windungen, die in den äußeren Lagen 66 angeordnet sind, sind vorzugsweise aus einem einzigen durchlaufenden Draht gewickelt, an dessen Enden der Spulenstrom eingespeist bzw. abgeführt wird, so dass die Spule 44-1d ein Magnetfeld erzeugt.

Die axiale Länge der axialen Windungsabschnitte 64 ist vorzugsweise so gewählt, dass die durch die axialen Windungsabschnitte 64 miteinander verbundenen, in Umfangsrichtung laufenden Windungsabschnitte 62d voneinander in axialer Richtung einen Abstand s aufweisen, der nach Maßgabe des oben im Zusammenhang mit der ersten Ausführungsform der Erfindung beschriebenen Abstands s zwischen axial benachbarten Spulen gewählt ist, nämlich in Abhängigkeit von einer Länge $L_m$ von Permanentmagnetabschnitten eines Permanentmagnetkörpers des Kolbens. So ist die mittlere axiale Länge s der Spule 44-1 d, d. h. die mittlere axiale Länge der axialen Windungsabschnitte 64, nach Maßgabe der oben angegebenen Gleichung (1) festgelegt.

Die in Umfangsrichtung verlaufenden Windungsabschnitte 62d sind in der zweiten Ausführungsform so gestaltet, dass sie den Außenumfang des Führungsrohrs 20d nicht vollständig als Ring umlaufen, sondern sich nur über einen Umfangswinkel von weniger als 360°, vorzugsweise weniger als 180° (vgl. Figuren 7 und 10) erstrecken. In der zweiten Ausführungsform liegt der von den in Umfangsrichtung laufenden Windungsabschnitten 62d überspannte Umfangswinkel in etwa zwischen 80 und 120°. An einem nicht von der Spule 44-1 d überdeckten, freien Umfangsabschnitt 68d kann das Führungsrohr 20d von außen zugänglich sein, um die visuelle Überwachung des Dosiervorgangs zu ermöglichen oder ein später noch zu beschreibendes Positionserfassungselement anzuordnen, ohne dass sich dieses mit der Spule 44-1 d behindert.

Wenn die in Umfangsrichtung laufenden Windungabschnitte 62d sich über einen Umfangswinkel von weniger als 180° erstrecken, so bedeutet dies, dass die Windungen 60d der Spule 44-1 d vollständig auf einer Seite einer die Längsmittelachse A des Führungsrohrs 20d enthaltenden Längsmittelebene E angeordnet sind (Figur 10). Dadurch wird die Anordnung einer zur Spule 44-1 d symmetrischen zweiten Spule 44-2d an der gleichen axialen Position wie die erste Spule 44-1 d ermöglicht. Im Bereich der Schnittlinie zwischen der Längsmittelebene E und der Außenwandung des Führungsrohrs 20d erstrecken sich dann zwischen den Spulen 44-1 d, 44-2d der freie Umfangsabschnitt 68d sowie ein weiterer, gegenüberliegender freier Umfangsabschnitt 70d.

In der zweiten Ausführungsform sind die Windungen 60d der Spulen 44-1d und 44-2d ferner so angeordnet, dass sich alle Windungen 60d beider Spulen 44-1 d, 44-2d im Wesentlichen zwischen zwei Tangentialebenen $T_1$, $T_2$ befinden, welche tangential an gegenüberliegenden Außenseiten (hier im Bereich der freien Umfangsabschnitte 68d, 70d) des Führungsrohrs 20d anliegen und zueinander parallel sind. In einer solchen Anordnung ergibt sich der zusätzliche Vorteil, dass bei Aneinanderreihung mehrerer Führungsrohre 20d eine höhere Packdichte erreicht werden kann als in einer Pipette, in der die Windungen der Spulen das Führungsrohr vollständig umlaufen. Wie aus dem Vergleich der Figuren 9 und 10 gut zu erkennen ist, ist im Falle der zweiten Ausführungsform gemäß Figur 10 eine Breite $y_1$ der Spulen 44-1 d, 44-2d in einer Richtung orthogonal zur Längsmittelachse A und parallel zur Längsmittelebene E kleiner als eine entsprechende Breite $y_2$ einer ringförmig das Führungsrohr umlaufenden Spule 44c (z. B. der Spule 44c der ersten Ausführungsform). Insbesondere könnten somit eine Mehrzahl von Führungsrohren 20d gemäß der zweiten Ausführungsform der Erfindung, welche an ihren freien Umfangsabschnitten 68d bzw. 70d aneinander gefügt werden, so dicht gepackt werden, dass die Spulen 44-1 d bis 44-4d die Anordnung im Wesentlichen nicht behindern. Eine Dosiervorrichtung mit mehreren Führungsrohren 20d kann somit zumindest in einer Dimension kompakteren Aufbau aufweisen.

Figur 8 zeigt eine dritte Ausführungsform der Erfindung als Variante der zweiten Ausführungsform der Erfindung, wobei Spulen 44-1 e, 44-2e einer Spulenanordnung 42e ein Führungsrohr 20e einer Pipette 10e ebenfalls nicht vollständig umlaufen, um die im Zusammenhang mit dem vierten Ausführungsbeispiel beschriebenen Vorteile und Effekte einer Zugänglichkeit des Führungsrohrs 20e von außen sowie einer höheren Packdichte mehrerer Führungsrohre 20e zu erreichen.

Im Gegensatz zur zweiten Ausführungsform verlaufen jedoch in der dritten Ausführungsform nicht alle Windungsabschnitte der Windungen 60e der Spulen 44-1 e, 44-2e an der Außenwand des Führungsrohrs 20e oder parallel zu der Außenwand. Stattdessen weist eine Windung 60e der dritten Ausführungsform Windungsabschnitte 72 auf, die sich von der Außenwand des Führungsrohrs 20e aus in eine Richtung von dem Führungsrohr 20e weg erstrecken und an einer vom Führungsrohr 20e entfernten Position wieder miteinander verbunden sind. Das axiale magnetische Feld im Inneren des Führungsrohrs 20e erzeugen in Umfangsrichtung verlaufende Windungsabschnitte 62e, deren Enden mit den vom Führungsrohr 20e weg verlaufenden Windungsabschnitten 72 verbunden sind. Wie in Figur 8 zu erkennen ist, können in der dritten Ausführungsform die Windungen 60e insbesondere im Wesentlichen in zur Längsmittelachse A orthogonalen Ebenen verlaufen.

Auch in der dritten Ausführungsform sind vorzugsweise zwei symmetrische Spulen 44-1e, 44-2e beiderseits einer Längsmittelebene E des Führungsrohrs 20e an gleicher axialer Position an das Führungsrohr 20e angesetzt, so dass sie gemeinsam ein relativ homogenes axiales Magnetfeld im Inneren des Führungsrohrs 20e erzeugen, vergleichbar mit dem magnetischen Feld einer Spule mit ringförmig das Führungsrohr umlaufenden Windungen (z. B. gemäß Figur 4).

Ferner ist in Figur 8 an einem von zwei gegenüberliegenden freien Umfangsabschnitten 68e, 70e, an denen der Außenumfang des Führungsrohrs 20e nicht von Windungen 60e der Spulen 44-1 e, 44-2e überdeckt ist, ein Positionserfassungselement 74 angeordnet, insbesondere ein magnetisches Messsystem, welches eine axiale Erfassung des von einem in das Führungsrohr 20e eingesetzten Kolben erzeugten Magnetfeldes erlaubt. Das Positionserfassungselement 74 kann beispielsweise ein magnetisierbarer Streifen sein, der sich in axialer Richtung an dem freien Umfangsabschnitt 68e oder/und 70e erstreckt und dessen axiales Magnetisierungsprofil von einer magnetischen Leseeinheit ausgelesen werden kann, um eine Position/Bewegung des Kolbens zu erfassen.

Die so erfasste Bewegung/Position des Kolbens wird vorzugsweise als Regelsignal an eine Steuereinrichtung zurückgeführt, welche auf Grundlage des Regelsignals ein Steuersignal ausgibt, auf dessen Grundlage den Spulen 44-1 e, 44-2e Strom einer bestimmten Stromstärke zugeführt wird. Die Spulen 44-1 e, 44-2e, die Steuereinrichtung sowie das Positionserfassungselement 74 bilden dann wesentliche Bestandteile eines geschlossenen Regelkreislaufs zur Regelung der Position bzw. Bewegung des in dem Führungsrohr 20e geführten Kolbens und somit zur präzisen, automatischen Regelung eines Dosiervorgangs der Pipette 10e.

Auch wenn die freien Umfangsabschnitte in der zweiten und in der dritten Ausführungsform den technischen Aufwand zur Anbringung und zum Betrieb eines Positionserfassungselements erleichtern, so können vorteilhaft Positionserfassungselemente oder andere Maßnahmen zur Erfassung der Position bzw. der Bewegung des Kolbens auch in anderen Ausführungsformen der Erfindung vorgesehen werden. Beispielsweise könnte das sich in axialer Richtung erstreckende Positionserfassungselement 74 der dritten Ausführungsform auch in Pipetten verwendet werden, in denen die äußeren Spulen das Führungsrohr vollständig umlaufen, wobei etwa ein magnetisierbarer Streifen zwischen die Außenwand des Führungsrohrs und die Windungen der Spulen eingeführt wird. Es wird dann eine entsprechende Korrektur des Erfassungssignals des Positionserfassungselements aufgrund des von den Spulen erzeugten Magnetfelds erforderlich sein.

Andere dem Fachmann bekannte Mittel zur Erfassung der Position/Bewegung des Kolbens, beispielsweise eine optische Erfassung oder eine Erfassung auf Grundlage anderer elektromagnetischer Signale oder akustischer Signale, ist gleichermaßen denkbar und gehen einher mit dem Vorteil, dass die zur Erfassung der Position/Bewegung des Kolbens genutzten elektromagnetischen oder akustischen Wellen nicht oder nur in geringerem Maße mit dem Magnetfeld der Spulen bzw. des Kolbens interferieren.

**Patentansprüche**

1. Pipette (10c; 10d; 10e), umfassend

   - ein Führungsrohr (20c; 20d; 20e),
   - einen in dem Führungsrohr (20c; 20d; 20e) verschiebbar eingesetzten Kolben (24c), welcher einen Permanentmagneten (54) aufweist,
   - eine Betätigungsanordnung (42c; 42d; 42e) zur Ausübung einer Kraft auf den Kolben (24c), um den Kolben (24c) in dem Führungsrohr (20c; 20d; 20e) zu verschieben, und
   - eine Kammer (28, 30) zur Aufnahme eines zu dosierenden Mediums (34), wobei das zu dosierende Medium (34) entsprechend einer Verschiebung des Kolbens (24c) aspirierbar oder dispensierbar ist,

   wobei die Betätigungsanordnung (42c; 42d; 42e) für eine magnetische Wechselwirkung mit dem Kolben (24c) eingerichtet ist,
   **dadurch gekennzeichnet,**
   **dass** der Kolben (24c) mindestens zwei aneinander angrenzende Permanentmagnetabschnitte (56-1, ..., 56-5) umfasst, deren Magnetisierungen ($M_i$, ..., $M_5$) axial zum Führungsrohr (20c; 20d; 20e) verlaufen, wobei die Magnetisierungen ($M_i$, ..., $M_5$) einander benachbarter Permanentmagnetabschnitte (56-1, ..., 56-5) zueinander entgegengesetzt gerichtet sind,
   **dass** die Betätigungsanordnung eine Magnetfelderzeugungsanordnung zur Erzeugung eines Magnetfelds aufweist, welche Magnetfelderzeugungseinrichtung (42; 42c) eine Spulenanordnung mit einer Mehrzahl von Spulen (44-1, 44-2, 44-3; 44c) umfasst, deren Windungen das Führungsrohr (20b; 20c) jeweils wenigstens abschnittsweise koaxial umlaufen, wobei die Spulen (44-1, 44-2, 44-3; 44c) axial zueinander versetzt sind, und
   **dass** der Abstand (s) zwischen axial benachbarten Spulen (44c), gemessen zwischen axial mittleren Positionen jeder Spule (44c), an die axiale Länge ($L_m$) eines Permanentmagnetabschnitts (56-1, ..., 56-5) und an eine Phasensteuerung der Spulen (44c) derart angepasst ist, dass der Abstand (s) zwischen benachbarten Spulen (44c) s = 1/n x 2 x $L_m$ beträgt, mit s als dem Abstand, n als der Anzahl an Phasen des Phasenbetriebs der Phasensteuerung und mit $L_m$ als der axialen Länge des Permanentmagnetabschnitts (56-1, ..., 56-5).

2. Pipette (10c; 10d; 10e) nach Anspruch 1, **dadurch gekennzeichnet, dass** die Permanentmagnetabschnitte (56-1, ..., 56-5) durch Permanentmagnete gebildet sind, welche so aneinander befestigt sind, dass magnetische Nordpole (N) benachbarter Permanentmagnete einander zugewandt und einander benachbart angeordnet sind oder dass magnetische Südpole (S) benachbarter Permanentmagnete einander zugewandt und einander benachbart angeordnet sind.

3. Pipette (10c; 10d; 10e) nach Anspruch 1 oder 2, **dadurch gekennzeichnet, dass** der Kolben (24c) mindestens einen Dichtkörper (58, 59) umfasst, welcher zwischen einer Innenwandung des Führungsrohrs (20c; 20d; 20e) und den Permanentmagnetabschnitten (56-1, ..., 56-5) oder dem Permanentmagneten angeordnet ist.

**4.** Pipette (10c; 10d; 10e) nach Anspruch 3, **dadurch gekennzeichnet, dass** der mindestens eine Dichtkörper in Form einer Kappe ausgebildet ist und auf ein axial oberes Ende oder/und ein axial unteres Ende des Permanentmagneten aufgesetzt ist oder auf einen axial obersten oder/und einen axial untersten Permanentmagnetabschnitt (56-1, ..., 56-5) aufgesetzt ist.

**5.** Pipette (10; 10a...e) nach Anspruch 1, **dadurch gekennzeichnet, dass** die Magnetfelderzeugungseinrichtung (40; 40a; 42; 42c...42e) dafür eingerichtet ist, ein Magnetfeld zu erzeugen, dessen magnetischer Fluss den Kolben (24; 24a; 24b; 24c) im Wesentlichen axial zum Führungsrohr (20; 20a...e) durchsetzt.

**6.** Pipette (10; 10a... e) nach einem der vorhergehenden Ansprüche, **dadurch gekennzeichnet, dass** die Betätigungsanordnung (40; 40a; 42; 42c..e) dafür eingerichtet ist, ein im Wesentlichen in axialer Richtung (A) des Führungsrohrs (20; 20a...e) bewegbares Magnetfeld zu erzeugen.

**7.** Pipette (10d; 10e) nach einem der vorhergehenden Ansprüche, **dadurch gekennzeichnet, dass** eine Spule (44-1 d, 44-2d; 44-1 e, 44-2e) mindestens eine Windung (60d; 60e) aufweist,
wobei die mindestens eine Windung (60d; 60e) nur einen Teilabschnitt des Umfangs des Führungsrohrs (20d; 20e) umläuft.

**8.** Pipette (10d; 10e) nach einem der vorhergehenden Ansprüche, **dadurch gekennzeichnet, dass** eine Spule (44-1d, 44-2d; 44-1e, 44-2e) mindestens eine Windung (60d; 60e) aufweist,
wobei die mindestens eine Windung (60d; 60e) vollständig auf einer Seite einer eine Längsmittelachse (A) des Führungsrohrs (20d; 20e) enthaltenden Längsmittelebene (E) verläuft.

**9.** Pipette (10d) nach Anspruch 7 oder Anspruch 8, **dadurch gekennzeichnet, dass** die mindestens eine Windung (60d) einen Windungsabschnitt (64) aufweist, welcher in axialer Richtung entlang einer Aussenwand des Führungsrohrs (20d) verläuft.

**10.** Pipette (10d) nach Anspruch 9 und nach einem der Ansprüche 1 bis 4, **dadurch gekennzeichnet, dass** eine axiale Länge (s) des axial verlaufenden Windungsabschnitts (64) an die Länge ($L_m$) eines Permanentmagnetabschnitts (56-1, ..., 56-5) angepasst ist.

**Claims**

**1.** A pipette (10c; 10d; 10e), comprising

- a guide tube (20c; 20d; 20e),
- a piston (24c) inserted displaceably in the guide tube (20c; 20d; 20e), comprising a permanent magnet (54),
- an actuating arrangement (42c; 42d; 42e) for exerting a force on the piston (24c) in order to displace the piston (24c) in the guide tube (20c; 20d; 20e), and
- a chamber (28, 30) for accommodating a medium to be metered (34), the medium to be metered (34) being aspiratable or dispensable in accordance with displacement of the piston (24c),

wherein the actuating arrangement (42c; 42d; 42e) is designed for a magnetic interaction with the piston (24c),
**characterized in that**
the piston (24c) comprises at least two mutually adjacent permanent magnet portions (56-1,..., 56-5), the magnet-izations ($M_l$,..., $M_5$) of which extend axially relative to the guide tube (20c; 20d; 20e), wherein the magnetizations ($M_l$,..., $M_5$) of mutually adjacent permanent magnet portions (56-1,..., 56-5) being directed in opposite directions relative to one another,
**in that** the actuating arrangement comprises a magnetic field generating arrangement for generating a magnetic field, the magnetic field generating means (42; 42c) comprising a coil arrangement with a plurality of coils (44-1, 44-2, 44-3; 44c), the turns of which surround the guide tube (20b; 20c) at least in parts coaxially, the coils (44-1, 44-2, 44-3; 44c) being axially offset in relation to one another, and
**in that** the distance (s) between axially adjacent coils (44c), measured between axially central positions of each coil (44c) is adapted so to the axial length ($L_m$) of a permanent magnet portion (56-1,..., 56-5) and to a phase control of the coils (44c) that a distance (s) between adjacent coils (44c) amounts to $s = 1/n \times 2 \times L_m$, with s for the distance, n for the number of phases of phase operation of phase control and with $L_m$ for the axial length of the permanent magnet portion (56-1,..., 56-5).

**2.** The pipette (10c; 10d; 10e) according to claim 1,
**characterized in that** the permanent magnet portions (56-1,..., 56-5) are formed by permanent magnets which are fastened together such that magnetic north poles (N) of adjacent permanent magnets are arranged facing one another and adjacent to one another or that magnetic south poles (S) of adjacent permanent magnets are arranged facing one another and adjacent to one another.

**3.** The pipette (10c; 10d; 10e) according to claim 1 or 2,
**characterized in that** the piston (24c) comprises at least one sealing member (58, 59) which is arranged between an internal wall of the guide tube (20c; 20d; 20e) and the permanent magnet portions (56-1,..., 56-5) or the permanent magnet.

**4.** The pipette (10c; 10d; 10e) according to claim 3,
**characterized in that** the at least one sealing member takes the form of a cap and that it is placed on an axially upper end and/or an axially lower end of the permanent magnet or is placed on an axially uppermost or/and an axially lowermost permanent magnet portion (56-1,..., 56-5).

**5.** The pipette (10; 10a...e) according to claim 1,
**characterized in that** the magnetic field generating means (40; 40a; 42; 42c...42e) is designed to generate a magnetic field whose magnetic flux passes through the piston (24; 24a; 24b; 24c) substantially axially to the guide tube (20; 20a...e).

**6.** The pipette (10; 10a...e) according to one of the preceding claims,
**characterized in that** the actuating arrangement (40; 40a; 42; 42c...e) is designed to generate a magnetic field movable substantially in the axial direction (A) of the guide tube (20; 20a...e).

**7.** The pipette (10d; 10e) according to one of the preceding claims,
**characterized in that** a coil (44-1 d, 44-2d, 44-1 e; 44-2e) comprises at least one turn (60d; 60e),
the at least one turn (60d; 60e) surrounding only a part of the circumference of the guide tube (20d; 20e).

**8.** The pipette (10d; 10e) according to one of the preceding claims,
**characterized in that** a coil (44-1 d, 44-2d, 44-1 e; 44-2e) comprises at least one turn (60d; 60e),
the at least one turn (60d; 60e) extending completely on one side of a longitudinal central plane (E) containing a longitudinal center axis (A) of the guide tube (20d; 20e).

**9.** The pipette (10d) according to claim 7 or claim 8,
**characterized in that** the at least one turn (60d) comprises a turn portion (64) which extends in the axial direction along an outer wall of the guide tube (20d).

**10.** The pipette (10d) according to claim 9 and one of claims 1 to 4,
**characterized in that** an axial length (s) of the axial turn portion (64) is adapted to the length ($L_m$) of a permanent magnet portion (56-1,..., 56-5).


**Revendications**

**1.** Une pipette (10c; 10d; 10e), comprenant

- un tube de guidage (20c; 20d; 20e),
- un piston (24c) inséré de manière déplacable dans le tube de guidage (20c; 20d; 20e), comprenant un aimant permanent (54),
- un arrangement d'actuation (42c; 42d; 42e) pour exercer une force sur le piston (24c) pour déplacer le piston (24c) dans le tube de guidage (20c; 20d; 20e), et
- une chambre (28, 30) pour recevoir un médium à doser (34), le médium à doser (34) pouvant être aspiré ou dispensé selon un déplacement du piston (24c),

l'arrangement d'actuation (42c; 42d; 42e) étant adapté pour une interaction magnétique avec le piston (24c),
**caractérisé en ce que**
le piston (24c) comprend au moins deux portions d'aimant permanent (56-1,..., 56-5) adjacentes dont les magné-

tisations ($M_l$,.... $M_5$) sont axiaux au tube de guidage (20c; 20d; 20e), les magnétisations ($MI$,..., $M_5$) de portions d'aimant permanent (56-1,..., 56-5) adjacentes étant orientées de manière opposée,

**en ce que** l'arrangement d'actuation comprend un arrangement de génération de champ magnétique pour générer un champ magnétique, le dispositif de génération de champ magnétique (42; 42c) comprenant un arrangement de bobines avec une pluralité de bobines (44-1, 44-2, 44-3; 44c), dont les spires entourent au moins en partie coaxialement le tube de guidage (20b; 20c), les bobines (44-1, 44-2, 44-3; 44c) étant décalées axialement les unes par rapport aux autres, et

la distance (s) entre des bobines axialement adjacentes (44c), mesurée entre des positions axialement centrales de chaque bobine (44c) étant adaptée à la longueur axiale ($L_m$) d'une portion d'aimant permanent (56-1,..., 56-5) et à un contrôle de phase des bobines (44c) de sorte que la distance (s) entre des bobines adjacentes (44c) est de $s = 1/n \times 2 \times L_m$, avec s étant la distance, n étant le nombre de phases de l'opération en phases du contrôle des phases et avec $L_m$ étant la longueur axiale de la portion d'aimant permanent (56-1,..., 56-5).

**2.** La pipette (10c; 10d; 10e) selon la revendication 1, **caractérisée en ce que** les portions d'aimant permanent (56-1,..., 56-5) sont formées par des aimants permanents qui sont attachés l'un à l'autre de sorte que des pôles nord magnétiques (N) d'aimants permanents adjacents sont arrangés face à face et de manière adjacente ou que des pôles sud magnétiques (S) d'aimants permanents adjacents sont arrangés face à face et de manière adjacente.

**3.** La pipette (10c; 10d; 10e) selon les revendications 1 ou 2, **caractérisée en ce que** le piston (24c) comprend au moins un corps d'étanchéité (58, 59) arrangé entre une paroi interne du tube de guidage (20c; 20d; 20e) et les portions d'aimant permanent (56-1,..., 56-5) ou l'aimant permanent.

**4.** La pipette (10c; 10d; 10e) selon la revendication 3, **caractérisée en ce que** ledit au moins un corps d'étanchéité est formé en forme de capot et est posé sur une extrémité axialement supérieure ou/et une extrémité axialement inférieure de l'aimant permanent ou est posé sur une portion d'aimant permanent (56-1,..., 56-5) axialement la plus haute ou/et la plus basse.

**5.** La pipette (10; 10a...e) selon la revendication 1, **caractérisée en ce que** le dispositif de génération de champ magnétique (40; 40a; 42; 42c...42e) est adapté pour générer un champ magnétique dont le flux magnétique passe à travers le piston (24; 24a; 24b; 24c) essentiellement axialement au tube de guidage (20; 20a...e).

**6.** La pipette (10; 10a...e) selon une des revendications précédentes, **caractérisée en ce que** le dispositif de génération de champ magnétique (40; 40a; 42; 42c..e) est adapté pour générer un champ magnétique déplaçable essentiellement dans un sens axial (A) du tube de guidage (20; 20a...e).

**7.** La pipette (10d; 10e) selon une des revendications précédentes, **caractérisée en ce qu'**une bobine (44-1 d, 44-2d, 44-1 e; 44-2e) comprend au moins une spire (60d; 60e),
ladite au moins une spire (60d; 60e) entourant seulement une partie de la circonférence du tube de guidage (20d; 20e).

**8.** La pipette (10d; 10e) selon une des revendications précédentes, **caractérisée en ce qu'**une bobine (44-1 d, 44-2d, 44-1 e; 44-2e) comprend au moins une spire (60d; 60e),
ladite au moins une spire (60d; 60e) s'étendant entièrement sur un côté d'un plan central longitudinal (E) comprenant un axe central longitudinal (A) du tube de guidage (20d; 20e).

**9.** La pipette (10d) selon la revendication 7 ou la revendication 8, **caractérisée en ce que** ladite au moins une spire (60d) comprend une portion de spire (64) qui s'étend dans le sens axial le long d'une paroi extérieure de tube de guidage (20d).

**10.** La pipette (10d) selon la revendication 9 et une des revendications 1 à 4, **caractérisée en ce que** une longueur axiale (s) de la portion de spire (64) qui s'étend dans le sens axial est adaptée à la longueur ($L_m$) d'une portion d'aimant permanent (56-1,..., 56-5).

Fig. 1

Fig. 2

Fig. 3

Fig. 4

54

54

54

| | | |
|---|---|---|
| | $M_1$ ⬆ 56-1 | N / S |
| | $M_2$ ⬇ 56-2 | S / N |
| | $M_3$ ⬆ 56-3 | N / S |
| | $M_4$ ⬇ 56-4 | S / N |
| | $M_5$ ⬆ 56-5 | N / S |

$L_m$

$L_m$

Fig. 5a          Fig. 5b          Fig. 5c

Fig. 6

Fig. 7

Fig. 8

Fig. 9

Fig. 10

EP 2 656 917 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080247913 A1
- US 4692673 A
- EP 0604903 A1
- EP 0604603 A1
- US 5700959 A